# FASCICULE DE BREVET EUROPEEN

(11) **EP 1 462 430 B1**
(45) Date de publication et mention de la délivrance du brevet: **14.11.2007**
(21) Numéro de dépôt: 04290786.5
(22) Date de dépôt: 24.03.2004
(51) Int. Cl.: C04B 41/87, B22C 3/00

(54) **Procédé pour passiver la surface de contact d'un récipient réfractaire majoritairement en mullite et enduit mis en oeuvre dans ce procédé**
Verfahren zum Passivieren der Oberfläche eines vorwiegend aus Mullit bestehenden feuerfesten Behälters und mit diesem Verfahren hergestellte Beschichtung
Method for passivating the surface of contact of a refractory container mainly of mullite and coating produced by this process

(30) Priorité: 28.03.2003 FR 0303815
(43) Date de publication de la demande: 29.09.2004
(73) Titulaire: SNECMA, 75015 Paris (FR)
(72) Inventeur: Marty, Christian, 92100 Boulogne (FR); Aprile, Umberto, 92500 Rueil-Malmaison (FR)

(56) Documents cités:
- EP-A- 1 072 573
- FR-A- 810 721
- GB-A- 1 031 377
- US-A- 5 394 933

## Description

### Domaine technique de l'invention

L'invention se rapporte à la fonderie des alliages métalliques et plus particulièrement à un procédé et à des produits pour passiver la surface de contact des récipients en céramiques à base mullite tels les creusets et les moules.
Par les termes "à base mullite" ou "majoritairement en mullite", on entend des récipients en mullite pure ou dont le composant le plus important en masse est la mullite.

### Etat de la technipue et problème posé

La mullite, soit le silicate d'alumine de formule chimique 2SiO₃ 3Al₂O₃, est un matériau bon marché permettant de fabriquer des récipients réfractaires ayant une excellente résistance aux chocs thermiques provoqués par la coulée des métaux et alliages en fonderie. On trouve notamment à bas pnx dans le commerce des creusets en mullite pure ou en matériau comportant majoritairement de la mullite. La mullite est utilisée également pour fabriquer des moules de fonderie, par exemple des lingotières.

Les alliages de titane sont très utilisés en aéronautique mais ils présentent l'inconvénient de réagir chimiquement à chaud avec la plupart des matériaux constituant les creusets et les moules qui les renferment, et en particulier avec la silice SiO₃ pure ou constituant la mullite. Ces réactions provoquent dans les pièces coulées des inclusions de composants non désirés susceptibles d'affaiblir les pièces. Pour remédier à cela, il est connu de revêtir la surface de contact du récipient avec une couche d'un matériau inerte tel l'alumine. Pour cela :
- on prépare une suspension aqueuse appelée "barbotine" constitué par une charge de farine d'alumine Al₂O₃, avec un produit appelé "liant", ce liant étant lui-même un mélange d'eau et de silice colloïdale SiO₂;
- on applique ce composé sur la surface de contact ;
- on sèche le récipient ;
- on cuit le récipient à haute température, soit typiquement 1200°C pendant une heures, cette cuisson provoquant la cristallisation des composants et la constitution d'une couche de contact dure et résistante.

On comprend que la silice du liant réagit chimiquement avec le titane. A noter par ailleurs qu'un récipient constitué exclusivement d'alumine serait parfaitement inerte chimiquement au titane, mais il serait trop fragile pour résister aux chocs thermiques pendant la coulée du métal en fusion.

Le document US 5, 394, 933 révèle des noyaux enduits en mullite pour le coulage des alliages de titanium.

Un premier problème est de réaliser, sur la surface de contact de récipients céramiques en matériau composé majoritairement de mullite, voire en mullite pure, un revêtement parfaitement inerte aux alliages de titane en fusion.

Un second problème est d'appliquer de tels revêtements à bas prix.

### Exposé de l'invention

Pour résoudre ce problème, l'invention propose un procédé pour passiver la surface de contact d'un récipient réfractaire en mullite. Un tel procédé est remarquable en ce qu'il comporte les opérations suivantes :
a. application sur la surface de contact d'un enduit comportant en masse 50% à 70% de charge de farine d'alumine Al₂O₃ et 30% à 50% de liant, ce liant comportant lui-même 50% à 60% de chlorure d'aluminium AlCl₃ dissout dans 40% à 50% d'eau ;
b. séchage ;
c. cuisson du récipient en atmosphère oxydante entre 1450°C et 1550°C pendant au moins 20mn.

Les inventeurs ont constaté qu'une solution de chlorure d'aluminium présente un pouvoir liant comparable à la suspension traditionnelle de silice colloïdale. Pendant la cuisson oxydante, l'aluminium du liant se transforme en alumine cristallisant avec l'alumine de la charge, alors que le chlore ainsi libéré s'évacue sous forme gazeuse. On obtient ainsi une couche de contact d'alumine parfaitement pure et apte à entrer au contact du titane en fusion sans réagir chimiquement avec lui, ce qui résout le premier problème.

Le procédé est économique car :
- les ingrédients utilisés sont bon marché ;
- la cuisson, bien que s'effectuant à des températures supérieures, reste courte;
- l'enduit peut être appliqué simplement à l'aérographe ou au pinceau selon les proportions de charge et de liant choisies;
ce qui résout le second problème.

L'invention propose également un enduit spécialement conçu pour mettre en oeuvre ce procédé

### Description détaillée

L'invention sera mieux comprise et les avantages qu'elle procure apparaîtront plus clairement au vu d'un exemple détaillé et commenté de mise en oeuvre.

Le procédé faisant l'objet de la présente invention comporte les opérations suivantes :
1) Préparation d'une barbotine constituée d'une charge de farine d'alumine Al₂O₃, de liant et de bleu de méthylène en quantité infinitésimale.
   L'alumine est appelée farine car il s'agit d'une poudre très fine dont la granulométrie est de l'ordre de 40µm. La farine d'alumine Al₂O₃ constitue la charge de la barbotine et constitue de 50% à 70% de la masse totale de la barbotine.
   Le liant constitue par conséquent 30% à 50% de la masse totale de la barbotine. Ce liant est une solution de chlorure d'aluminium AlCl₃ dissout dans de l'eau, le chlorure d'aluminium AlCl₃ constituant 50% à 60% de la masse totale du liant et l'eau constituant par conséquent 40% à 50% de la masse totale du liant.
2) Application de la barbotine sur la surface de contact du récipient, cette application pouvant se faire par les moyens connus.
   Avec 50% à 55% de charge de farine d'alumine Al₂O₃ et 45% à 50% de liant, la barbotine obtenue est relativement fluide et peut être appliquée à l'aérographe.
   Avec 55% à 70% de charge de farine d'alumine Al₂O₃ et 30% à 45% de liant, la barbotine obtenue est plus épaisse et sera appliquée de préférence au pinceau.
   Avec plus de 70% de charge de farine d'alumine Al₂O₃ et moins de 30% de liant, la barbotine devient très épaisse et elle peut difficilement être appliquée en couches minces.
   Au contraire, avec moins de 50% de charge de farine d'alumine Al₂O₃ et plus de 50% de liant, la barbotine devient trop liquide et présente l'inconvénient de se rétracter et de se craqueler pendant le séchage.
   L'enduit comporte également un colorant organique soluble dans l'eau.
   Du fait que la mullite, l'alumine et le chlorure d'aluminium sont de couleur blanche, la coloration de la barbotine au bleu de méthylène permet de contrôler visuellement l'épaisseur et la régularité de l'enduction. En pratique, le bleu de méthylène représentera de 0,1% à 0,5% de la masse totale de la barbotine. Le bleu de méthylène peut être évidemment remplacé par tout colorant organique pyrolysable, c'est à dire destructible à chaud, mais comportant un fort pouvoir colorant afin de pouvoir être utilisé en très faible quantité pour ne pas altérer le revêtement.
3) Séchage du revêtement selon les moyens connus, par exemple en plaçant le récipient dans un four pendant une heure à 120°C.
4) Cuisson du revêtement au four en atmosphère oxydante à une température comprise entre 1450°C et 1550°C pendant 20 minutes à une heure, typiquement à 1500°C pendant 30 minutes, la montée et la descente en température devant toutefois rester inférieures à 300°C par heure afin de limiter les contraintes de dilatation thermique
   L'atmosphère oxydante peut être simplement l'air ambiant. Pendant l'étape de cuisson oxydante, l'aluminium du chlorure d'aluminium se transforme en alumine et remplit le volume occupé initialement par le liant, alors que le chlore est libéré et s'évacue sous forme gazeuse.

## Revendications

1. Procédé pour passiver la surface de contact d'un récipient réfractaire majoritairement en mullite **caractérisé en ce qu**'il comporte les opérations suivantes :
a. application sur la surface de contact d'un enduit comportant en masse 50% à 70% de charge de farine d'alumine Al₂O₃ et 30% à 50% de liant, ce liant comportant lui-même 50% à 60% de chlorure d'aluminium AlCl₃ dissout dans 40% à 50% d'eau;
b. séchage;
c. cuisson du récipient en atmosphère oxydante entre 1450°C et 1550°C pendant au moins 20mn.

2. Procédé selon la revendication 1 **caractérisé en ce que** l'enduit comporte également un colorant organique soluble dans l'eau.

3. Procédé selon la revendication 2 **caractérisé en ce que** le colorant est du bleu de méthylène en proportion massique totale de 0,1% à 0,5%.

4. Procédé selon l'une des revendications 1 à 3 **caractérisé en ce que** l'enduit comporte en masse 50% à 55% de charge de farine d'alumine Al₂O₃ et 45% à 50% de liant, et **en ce que** son application est faite à l'aérographe.

5. Procédé selon l'une des revendications 1 à 3 **caractérisé en ce que** l'enduit comporte en masse 55% à 70% de charge de farine d'alumine Al₂O₃ et 30% à 45% de liant, et **en ce que** son application est faite au pinceau.

6. Enduit mis en oeuvre dans le procédé revendiqué **caractérisé en ce qu**'il comporte en masse 50% à 70% de charge de farine d'alumine Al₂O₃ et 30% à 50% de liant, ce liant comportant lui-même 50% à 60% de chlorure d'aluminium AlCl₃ dissout dans 40% à 50% d'eau.

7. Enduit selon la revendication 6 **caractérisé en ce qu**'il comporte en masse 50% à 55% de charge de farine d'alumine Al₂O₃ et 45% à 50% de liant.

8. Enduit selon la revendication 6 **caractérisé en ce qu**'il comporte en masse 55% à 70%. de charge de farine d'alumine Al₂O₃ et 30% à 45% de liant.

## Claims

1. Method for passivating the contact surface of a refractory container made mainly of mullite, **characterized in that** it comprises the following operations:
a. application to the contact surface of a coating comprising 50% to 70% by weight of alumina flour (Al₂O₃) filler and 30% to 50% of binder, this binder itself comprising 50% to 60% of aluminum chloride AlCl₃ dissolved in 40% to 50% of water;
b. drying;
c. firing of the container in an oxidizing atmosphere between 1450°C and 1550°C for at least 20 minutes.

2. Method according to Claim 1, **characterized in that** the coating also comprises a water-soluble organic dye.

3. Method according to Claim 2, **characterized in that** the dye is methylene blue in a total proportion of 0.1% to 0.5% by weight.

4. Method according to one of Claims 1 to 3, **characterized in that** the coating comprises 50% to 55% by weight of alumina flour (Al₂O₃) filler and 45% to 50% of binder, and **characterized in that** it is applied by air brush.

5. Method according to one of Claims 1 to 3, **characterized in that** the coating comprises 55% to 70% by weight of alumina flour (Al₂O₃) filler and 30% to 45% of binder, and **characterized in that** it is applied by brush.

6. Coating used in the method claimed, **characterized in that** it comprises 50% to 70% by weight of alumina flour (Al₂O₃) filler and 30% to 50% of binder, this binder itself comprising 50% to 60% of aluminum chloride AlCl₃ dissolved in 40% to 50% of water.

7. Coating according to Claim 6, **characterized in that** it comprises 50% to 55% by weight of alumina flour (Al₂O₃) filler and 45% to 50% of binder.

8. Coating according to Claim 6, **characterized in that** it comprises 55% to 70% by weight of alumina flour (Al₂O₃) filler and 30% to 45% of binder.

## Patentansprüche

1. Verfahren zur Passivierung der Berührungsoberfläche eines vorwiegend aus Mullit bestehenden feuerfesten Behälters,
**dadurch gekennzeichnet,**
**dass** es die folgenden Arbeitsschritte umfasst:
a. Auftragen einer Beschichtung, die 50% bis 70% Masseanteile Aluminiummehl Al₂O, als Füllstoff und 30% bis 50% Bindemittel enthält, auf die Berührungsoberfläche, wobei dieses Bindemittel seinerseits 50% bis 60% Aluminiumchlorid AlCl₃ in 40% bis 50% Wasser aufgelöst enthält;
b. Trocknung;
c. Brennen des Behälters in oxidierender Atmosphäre bei 1450 °C bis 1550 °C während mindestens 20 min.

2. Verfahren nach Anspruch 1,
**dadurch gekennzeichnet,**
**dass** die Beschichtung auch einen wasserlöslichen, organischen Farbstoff enthält.

3. Verfahren nach Anspruch 2,
**dadurch gekennzeichnet,**
**dass** der Farbstoff Methylenblau in einem Gesamtmassegehalt von 0,1% bis 0,5 % ist.

4. Verfahren nach einem der Ansprüche 1 bis 3,
**dadurch gekennzeichnet,**
**dass** die Beschichtung 50% bis 55% Masseanteile Aluminiummehl Al₂O₃ als Füllstoff und 45% bis 50% Bindemittel enthält, und dass ihr Auftragen mit einem Spritzapparat erfolgt.

5. Verfahren nach einem der Ansprüche 1 bis 3,
**dadurch gekennzeichnet,**
**dass** die Beschichtung 55% bis 70% Masseanteile Aluminiummehl Al₂O₃ als Füllstoff und 30% bis 45% Bindemittel enthält, und dass ihr Auftragen mit dem Pinsel erfolgt.

6. Beschichtung, die in dem beanspruchten Verfahren verwendet wird,
**dadurch gekennzeichnet,**
**dass** sie 50% bis 70% Masseanteile Aluminiummehl Al₂O₃ als Füllstoff und 30% bis 50% Bindemittel enthält, wobei dieses Bindemittel seinerseits 50% bis 60% Aluminiumchlorid AlCl₃ in 40% bis 50% Wasser aufgelöst enthält.

7. Beschichtung nach Anspruch 6,
**dadurch gekennzeichnet,**
**dass** sie 50% bis 55% Masseanteile Aluminiummehl Al₂O₃ als Füllstoff und 45% bis 50% Bindemittel enthält.

8. Beschichtung nach Anspruch 6,
**dadurch gekennzeichnet,**
**dass** sie 55% bis 70% Masseanteile Aluminiummehl Al₂O₃ als Füllstoff und 30% bis 45% Bindemittel enthält.
